# EUROPEAN PATENT SPECIFICATION

(11) **EP 2 456 081 B1**
(45) Date of publication and mention of the grant of the patent: **05.09.2018**
(21) Application number: 10800036.5
(22) Date of filing: 14.07.2010
(51) Int. Cl.: H04B 1/38, H04M 1/02

(54) **MOBILE TERMINAL**
MOBILES ENDGERÄT
TERMINAL MOBILE

(30) Priority: 14.07.2009 KR 20090064224
(43) Date of publication of application: 23.05.2012
(73) Proprietor: Bluebird Soft Co., Ltd., Gangnam-gu Seoul 135-964 (KR)
(72) Inventor: CHO, Sang Chul, Seoul (KR); LEE, Jang Won, Seoul (KR)
(74) Representative: Grünecker Patent- und Rechtsanwälte PartG mbB
(86) International application number: PCT/KR2010/004586
(87) International publication number: WO 2011/008025

(56) References cited:
- JP-A- 2008 010 599
- KR-A- 20050 050 424
- KR-A- 20070 010 508
- KR-Y1- 200 353 251
- US-A1- 2005 130 029
- US-A1- 2007 037 451
- US-A1- 2007 166 608

## Description

### [TECHNICAL FIELD]

The present invention relates to a mobile terminal, and more particularly to a mobile terminal which has a simple and uncomplicated structure but detachably couples with a battery module more easily than a conventional one.

### [BACKGROUND ART]

A mobile terminal is a terminal freely usable while moving without regard to places. As a representative mobile terminal, there is a cellular phone or the like mobile communication terminal, a personal digital assistant (PDA), etc. Therefore, the term 'mobile terminal' involves the PDA, the cellular phone, etc., but the following descriptions will be limited to the PDA for the convenience of explanation.

In complicated and diversified society, individuals each have felt the need to store and keep personal information in his/her own ways, and thus various products have been launched in the market so as to meet the personal needs. One of them is the PDA. The PDA is also called a pocket computer, which is a generic term for palm-sized small devices having calculation, information storage and searching functions for personal or business use. Occasionally, it has been mostly used in maintaining information about a schedule calendar, an address book, etc.

In particular, an industrial PDA has currently been mainly used in the distribution industry, but its market has been gradually spread. The industrial PDA refers to a PDA having various office functions, such as a barcode scanner, a credit card machine, etc. not present in a general PDA. If the industrial PDA is used, it is advantageous to efficiently progress delivery, data management, related business, etc. For example, an insurance broker of an insurance company can directly process various insurance-related tasks such as customer information management, customer searching, scheduling, a daily record of consultation, memorial day searching, funds statement processing, etc. on the spot through the PDA; a medical worker of a hospital can input or search X-ray image and graphic data as well as medical records and history of a patient, and a prescription through the industrial PDA without being constrained by time and places; and a traffic or patrol cop of the police can perform a crackdown outside of the office through the industrial PDA so that a fine levied for violation of the traffic regulations, the payment of which is currently possible after a lapse of 2 or 3 days from the crackdown, can be directly paid to banking facilities, and it is thus possible for the traffic or patrol cop to remarkably reduce a time taken in the crackdown outside of the office.

As used in various industrial fields, the industrial PDA is required to meet conditions above a predetermined level to endure an industrial environment other than a general environment unlike a general PDA. For example, it is absolutely predictable that the industrial PDA may be used in a refrigerated warehouse at 10 or less degrees below zero or may be used outdoors for a long time, unlike the general PDA. Further, the industrial PDA has to have shock resistance, water-resistant property, heat-resisting property/cooling function, etc. above a predetermined level to raise competiveness as a product since a postman or the like user may carelessly handle it on business. Thus, it is essential that the industrial PDA has to not only be stronger and harder than the general PDA but also have the water-resistant property to keep out rain and snow. However, the outer appearance of the industrial PDA is considerably larger than that of the general PDA since it is designed to have a structure for satisfying the foregoing conditions such as shock resistance, water-resistant property, heat-resisting property/cooling function, etc. above a predetermined level and has to be mounted with a barcode scanner or the like as described above. Therefore, it is needed to reduce the size of the PDA so as to be conveniently used by Asians who have a smaller hand than Westerners.

Meanwhile, among conventional mobile terminals, the industrial PDA includes a battery module as a means for power supply, and the battery module provided in a typical industrial PDA has a simple hook structure to be coupled to and separated from a rear case.

However, in the conventional mobile terminal to which the battery module is detachably coupled by such a simple hook structure, degree of hook precision may cause the battery module to be too easily separated or hardly coupled. In the latter case, if excessive force is applied for the coupling, the hook made by injection molding may be broken.

US 2007/0166608 A1 discloses a battery cover assembly for a portable electronic device, wherein the battery cover comprises a locking member so as to be fixed to a locking groove defined in the housing of the mobile phone.

US 2005/0130029 A1 discloses a battery pack mounting apparatus for a communication terminal, wherein the battery pack comprises an engagement groove, in which a rotary locking unit engages.

### [DISCLOSURE OF INVENTION]

### [TECHNICAL PROBLEM]

The object of the present invention is to provide a mobile terminal which has a simple and uncomplicated structure but detachably couples with a battery module more easily than a conventional one.

### [ADVANTAGEOUS EFFECTS]

According to the present invention, there is provided a mobile terminal according to claim 1 which has a simple and uncomplicated structure but detachably couples with a battery module more easily than a conventional one.

### [BRIEF DESCRIPTION OF THE DRAWINGS]

FIG. 1 is a perspective view of a mobile terminal according to an exemplary embodiment of the present inventive concept.
FIG. 2 is an exploded perspective view of the mobile terminal of FIG. 1.
FIG. 3 shows FIG. 1 at a different angle.
FIG. 4 is a rear perspective view of a mobile terminal to which a battery module is coupled.
FIG. 5 is a rear perspective view of a mobile terminal from which the battery module is separated.
FIG. 6 is an exploded perspective view of a rear case, a rotation plate and a locker.
FIG. 7 shows FIG. 6 at a different angle.
FIG. 8 is a partially enlarged view of FIG. 6.
FIG. 9 is a partially enlarged view of FIG. 7.
FIG. 10 is a rear view of the locker.
FIG. 11 is an operational view of a free-pivoting restrictor when the battery module is locked.
FIG. 12 is an operational view of the free-pivoting restrictor when the battery module is released.

### [BEST MODE FOR CARRYING OUT THE INVENTION]

According to an aspect of the present inventive concept, there is provided a mobile terminal including a front case; a rear case detachably coupled to the front case at a rear of the front case with a component reception space, in which a main printed circuit board (PCB) is arranged, therebetween, and including a battery reception portion recessed toward the front case at one side thereof; a battery module coupled to the battery reception portion; and a locker rotatably coupled to the rear case and making the battery module be locked to or released from the battery reception portion.

The lockers form a pair, and include: a body; a flange protruding from one side of the body, and being inserted in a locking groove of the battery module when the body is arranged in a lengthwise direction of the rear case, but separated from the locking groove of the battery module when the body is arranged in a direction transverse to the lengthwise direction of the rear case; and a shaft connected to the body and inserted in a locker coupling hole of the rear case.

One of the rear case formed with the locker coupling hole and the body of the locker may be formed with a pivoting groove, and the other one may be formed with a pivoting angle restricting projection for restricting the pivoting angle of the pivoting groove.

The pivoting groove may be provided on a rear of the body in the form of an arc, and the pivoting angle restricting projection may be provided protruding from the surface of the rear case formed with the locker coupling hole.

The body may have a convex surface from which a locker handling rib further protrudes.

The mobile terminal may further include a pivoting plate coupled to the shaft of the locker by a bolt from a rear of the rear case and pivoting along with the locker.

One of the shaft and the pivoting plate may be provided with at least one coupling projection, and the other one may be formed with a projection insertion groove in which the coupling projections are partially inserted.

The rear of the rear case formed with the locker coupling hole may further be formed with a pivoting plate inserting boss in which the pivoting plate is inserted.

The mobile terminal may further include a free-pivoting restrictor for restricting free-pivoting of the locker in the pivoting plate and the pivoting plate inserting boss.

The free-pivoting restrictor may include a stopper formed on one of the pivoting plate and the pivoting plate inserting boss; and a protrusion formed in the other one of the pivoting plate and the pivoting plate inserting boss and catching the stopper.

The stopper may be provided in the pivoting plate, and the protrusions may be provided in the pivoting plate inserting boss while forming a pair at different positions along a circumferential direction of the pivoting plate.

The stopper may be provided as a free end in the pivoting plate so as to be elastically movable inward or outward in a radial direction.

Outer surfaces of the stopper and the protrusions may be rounded.

The battery module and the battery reception portion may be provided with a primary coupling portion for primarily coupling the battery module and the battery reception portion before operation of the locker.

The mobile terminal may further include a middle case arranged between the front and rear cases and assembled together with the front and rear cases, at one side of which the main PCB is assembled.

### [MODE FOR INVENTION]

The attached drawings for illustrating preferred embodiments of the present invention are referred to in order to gain a sufficient understanding of the present invention, the merits thereof, and the objectives accomplished by the implementation of the present inventive concept.

Hereinafter, the present inventive concept will be described in detail by explaining preferred embodiments of the invention with reference to the attached drawings. However, descriptions about publicly known functions or configurations will be omitted for clarity.

A mobile terminal is a terminal freely usable while moving without regard to places. As a representative mobile terminal, there is a cellular phone or the like mobile communication terminal, a personal digital assistant (PDA), etc. Therefore, the term 'mobile terminal' involves the PDA, the cellular phone, etc., but the following descriptions will be limited to the PDA for the convenience of explanation.

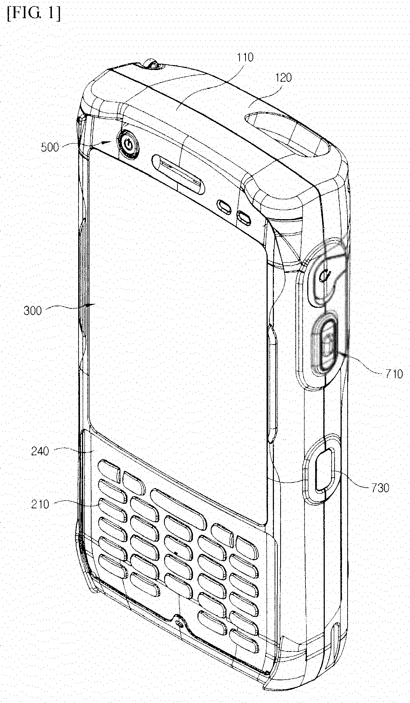

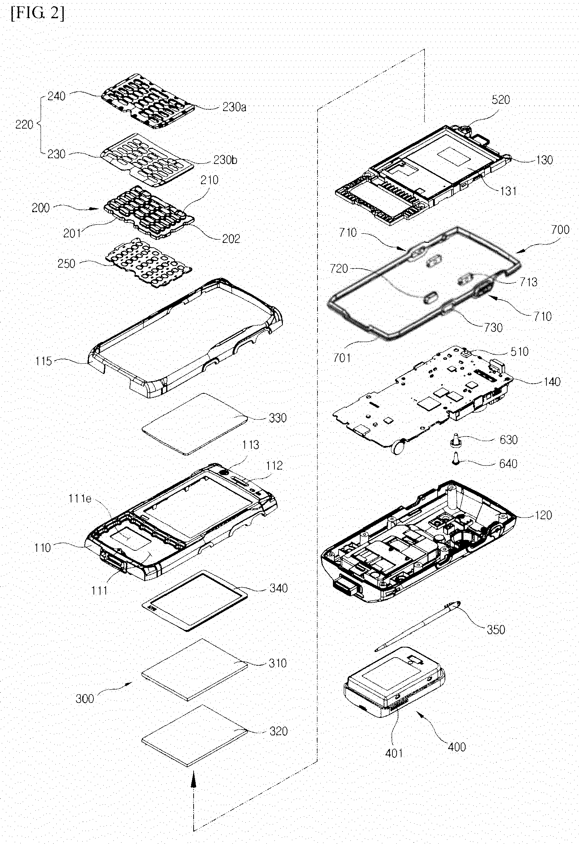

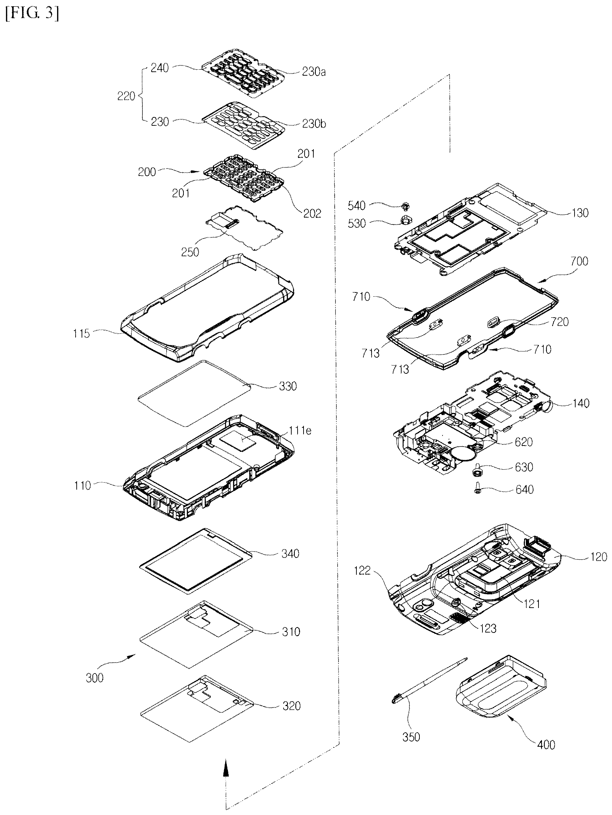

FIG. 1 is a perspective view of a mobile terminal according to an exemplary embodiment of the present inventive concept, FIG. 2 is an exploded perspective view of the mobile terminal of FIG. 1, and FIG. 3 shows FIG. 1 at a different angle.

As shown therein, the mobile terminal in this exemplary embodiment includes a front case 110 having a keypad-accommodating portion 111, a rear case 120 detachably coupled to the front case 110 at a rear surface of the front case 110, a middle case 130 arranged between the front and rear cases 110 and 120 and assembled together with the front and rear cases 110 and 120, and a battery module 400 detachably coupled to a battery reception portion 121.

Like the front and rear cases 110 and 120, the middle case 130 made by injection molding is a component to be assembled together with the front and rear cases 110 and 120 between the front and rear cases 110 and 120.

The middle case 130 serves to not only support a main printed circuit board (PCB) 140 but also partially support a key pad 200 and a touch screen 300.

Thus, the mobile terminal 300 in this exemplary embodiment includes the middle case 130 to support the main PCB and partially support the keypad 200 and the touch screen 300, so that components can be firmly assembled and improved in durability. A touch pen 350 is coupled to one side of the rear case 120.

The mobile terminal in this exemplary embodiment further includes the keypad 200 and the touch screen 300. Both the keypad 200 and the touch screen 300 are provided to enhance convenience in control with regard to the storage, maintenance, management, etc. of information. Both the keypad 200 and the touch screen 300 may be provided as shown in this exemplary embodiment in order to improve the convenience in control, but it will be fine if one of them is provided.

In this exemplary embodiment, the touch screen 300 includes an upper electrode 310 having a polyethylene terephthalate (PET) film with indium tin oxide (ITO), a lower electrode 320 having a glass substrate with ITO and a dot spacer formed toward the upper electrode 310, a wiring (not shown) connecting the upper electrode 310 and the lower electrode 320 and electrically connected to the main PCB 140, tempered glass 330 coupled to the front surface of the front case 110, and a water-resistant tape 340 attached to the rear of the front case 110. The touch screen 300 in this exemplary embodiment employs a resistive overlay touch screen.

The keypad 200 in this exemplary embodiment is assembled at a corresponding position while having a structure of preventing water or moisture from entering a keypad area 200. To this end, an edge portion of the keypad 200 is provided with a water-resistant blade 201 extending toward the keypad-accommodating portion 111. On the bottom of the keypad-accommodating portion 111 is formed a blade-insertion rail 111a in which the water-resistant blade 201 is partially inserted.

The water-resistant blade 201 is continuously formed along a circumferential direction of the keypad 200. Since the keypad 200 has an approximately rectangular shape, the water-resistant blade 201 also has a continuous rectangular shape approximately, but not quite. To fit with the water-resistant blade 201, the blade-insertion rail 111a has a continuous closed-loop shape corresponding to the water-resistant blade 201.

If the water-resistant blade 201 of the keypad 200 is inserted in the blade-insertion rail 111a, the water-resistant blade 201 made of flexible rubber closely contacts the blade-insertion rail 111a, thereby performing a water-resistant function. Accordingly, even if water enters the keypad area, it is prevented that water enters a keypad PCB 250 provided inside the keypad 200 or the main PCB 140 coupled to the middle case 130 and makes a trouble with the PCBs 250 and 140.

The keypad PCB 250 smaller than the keypad 200 is inserted in the keypad 200. The keypad cover 220 is coupled to the keypad-accommodating portion 111 in front of the keypad 200 so that the key buttons 210 can be exposed to the outside. The keypad cover 220 includes a keypad protective cover 230 placed on the keypad 200 and coupled to the keypad-accommodating portion 111, and a keypad decorative cover 240 coupled to the top of the keypad protective cover 230.

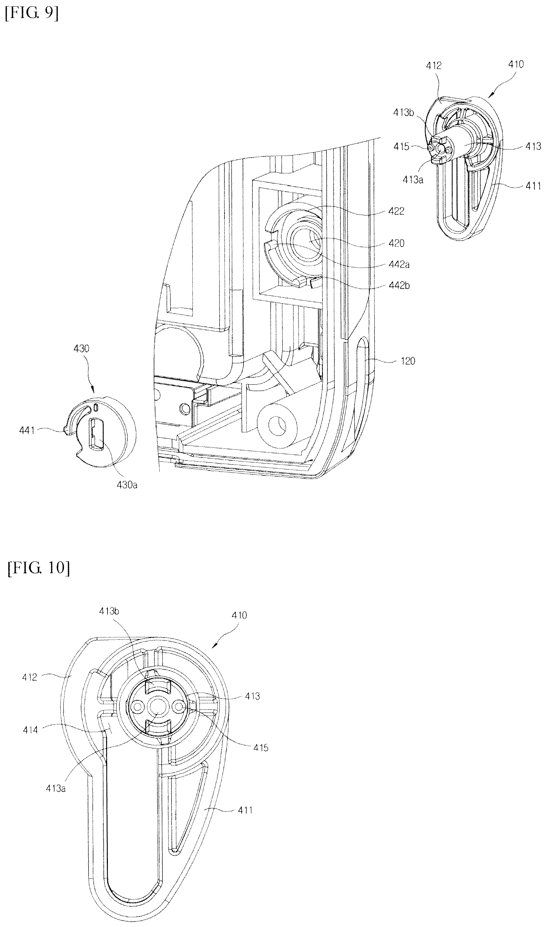

Meanwhile, in addition to the foregoing structure, the mobile terminal in this exemplary embodiment further includes a power key unit 500, a reset key unit 600 and a water-resistant rubber 700 as shown in FIGs. 9 to 11.

The power key 540 is assembled at a corresponding position as being coupled to a power-key water-resistant cap 530, and the reset key 640 is assembled at a corresponding position as being coupled to a reset-key water-resistant cap 630, so that the power key 540 and the reset key 640 can perform the water-resistant function.

The water-resistant rubber 700 serves to airtightly seal up the front and rear cases 110 and 120 between the front and rear cases 110 and 120. Further, side keys 710 are symmetrically provided in opposite sides of the water-resistant rubber 700 while forming a pair. Also, a display window coupling portion 730 to which a display window 720 is coupled is formed at one side of the water-resistant rubber 700 at a position spaced apart from the side key 710.

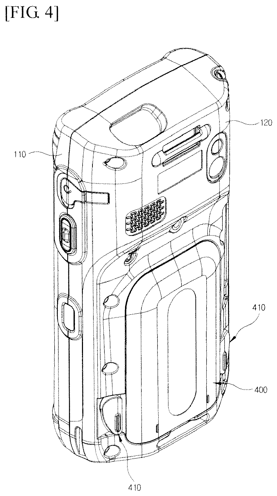

In the meantime, the mobile terminal in this exemplary embodiment includes a battery module 400 to supply power to the main PCB 140, which has a structure capable of detachably coupling with a battery module more easily than a conventional one. This structure will be described with reference to FIGs. 4 to 12.

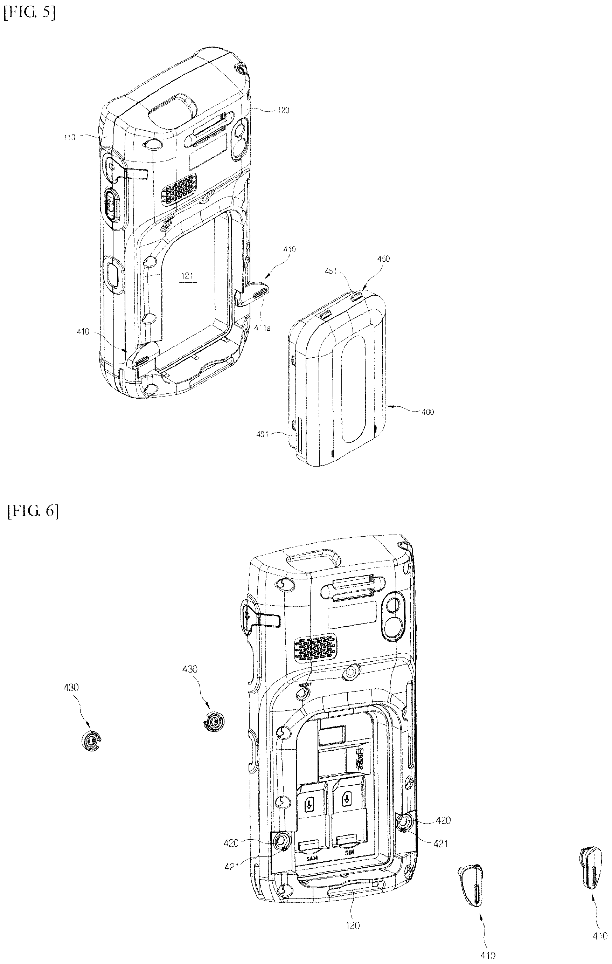

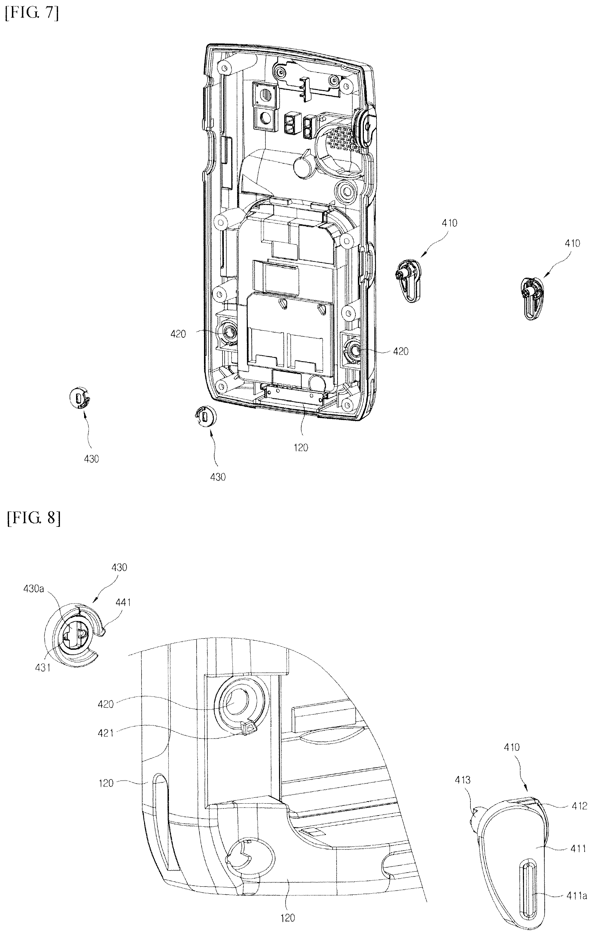

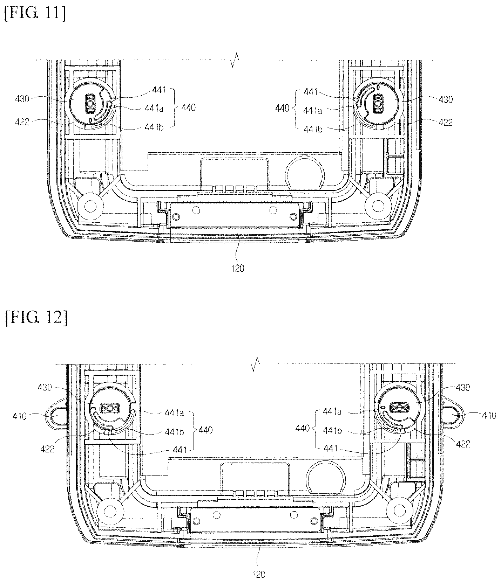

FIG. 4 is a rear perspective view of a mobile terminal to which a battery module is coupled, FIG. 5 is a rear perspective view of a mobile terminal from which the battery module is separated, FIG. 6 is an exploded perspective view of a rear case, a rotation plate and a locker, FIG. 7 shows FIG. 6 at a different angle, FIG. 8 is a partially enlarged view of FIG. 6, FIG. 9 is a partially enlarged view of FIG. 7, FIG. 10 is a rear view of the locker, FIG. 11 is an operational view of a free-pivoting restrictor when the battery module is locked, and FIG. 12 is an operational view of the free-pivoting restrictor when the battery module is released.

As shown therein, the mobile terminal in this exemplary embodiment includes lockers 410 rotatably coupled to the rear case 120 and making the battery module 400 to be locked to or released from the battery reception portion 121.

In this exemplary embodiment, the lockers 410 forms a pair and symmetrically provided in the rear case 120, but not limited thereto.

The locker 410 includes a body 411, a flange 412 protruding from one side of the body 411, and a shaft 413 connected to the body 411 and inserted in a locker coupling hole 420 of the rear case 120.

The body 411, the flange 412 and the shaft 413 may be made of one material and injection-molded as a single body. They may be made of metal or plastics. In the latter case, they may undergo a plating or coating process.

The body 411 has a convex surface from which a locker handling rib 411a further protrudes. The locker handling rib 411a may prevent a slip when the body 411 is handled.

While pivoting on the shaft 413, the flange 412 protruding from one side of the body 411 is inserted in a locking groove 401 of the battery module 400 when the body 411 is arranged in a lengthwise direction of the rear case 120 (refer to FIGs. 4 and 11), but separated from the locking groove 401 of the battery module 400 when the body 411 is arranged in a direction transverse to the lengthwise direction of the rear case 120 (refer to FIG. 5 and 12).

Thus, the battery module 400 can be locked and released on the basis of the operations that the flange 412 of the locker 410 is inserted in and separated from the locking groove 401 of the battery module 400 while pivoting. In this case, if the flange 412, i.e., the locker 410 pivots 360 degrees, it may be inconvenient to lock the battery module 400.

In other words, there is a need of restricting a pivoting angle of the locker 410 in order to more conveniently lock and release the battery module 400.

To this end, a pivoting groove 414 is formed in one of the rear case 120 formed with the locker coupling hole 420 and the body 411 of the locker 410, and a pivoting angle restricting projection 421 for restricting the pivoting angle of the pivoting groove 414 is formed in the other one.

In this exemplary embodiment, the pivoting groove 414 is provided in the body 411 of the locker 410, and the pivoting angle restricting projection 421 is provided in the rear case 120, but not limited thereto. Alternatively, the positions of the pivoting groove and the pivoting angle restricting projection may be exchanged with each other.

As shown in FIG. 10, the pivoting groove 414 formed in the body 411 of the locker 410 is provided on the rear of the body 411 in the form of an arc. As shown in FIG. 6, the pivoting angle restricting projection 421 is provided protruding from the surface of the rear case 120 formed with the locker coupling hole 420. Thus, if the locker 410 pivots, the pivoting angle restricting projection 421 is caught in opposite ends of the pivoting groove 414 while moving along a path in the pivoting groove 414, thereby restricting the pivoting angle of the locker 410.

As shown in FIGs. 6 to 9, the mobile terminal in this exemplary embodiment further includes a pivoting plate 430 coupled to the shaft 413 of the locker 410 by a bolt from the rear of the rear case 120 and pivoting along with the locker 410.

To couple the pivoting plate 430 taking directionality into account, one of the shaft 413 and the pivoting plate 430 is provided with a plurality of coupling projections 415, and the other one is formed with a projection insertion groove 431 in which the coupling projections 415 are partially inserted.

In this exemplary embodiment, the plurality of coupling projections 415 is provided in the shaft 413, and the projection insertion groove 431 is provided in the pivoting plate 430, but not limited thereto. Alternatively, the positions of the coupling projections and the projection insertion groove may be exchanged with each other.

The shaft 413 and the pivoting plate 430 are formed with holes 413a and 430a to be fastened with a bolt. The hole 430a formed in the pivoting plate 430 has an approximately rectangular shape, and a pair of protrusion guides 413b formed in the shaft 413 is inserted in opposite inner sides of the hole 430a of the pivoting plate 430.

Meanwhile, the rear of the rear case 120 formed with the locker coupling hole 420 is further formed with a pivoting plate inserting boss 422 in which the pivoting plate 420 is inserted.

Further, a free-pivoting restrictor 440 for restricting free-pivoting of the locker 410 is provided in the pivoting plate 430 and the pivoting plate inserting boss 422.

Here, the free-pivoting refers to a case that the locker 410 freely pivots even though the battery module 400 is locked as shown in FIGs. 4 and 11, and a case that the position of the locker 410 is arbitrarily varied when the battery module 400 is released as shown in FIGs. 5 and 12.

Although the free-pivoting restrictor 440 has weak force to restrict the pivoting of the locker 410, it is very effective in that the locker 410 is not freely pivoted by vibration or external shock.

The free-pivoting restrictor 440 includes a stopper 441 formed on the pivoting plate 430, and protrusions 442a and 442b inserted in the pivoting plate inserting boss 422 and catching the stopper 441. Alternatively, the positions of the stopper 441 and the protrusions 442a and 442b may be exchanged with each other. The outer surfaces of the stopper 441 and the protrusions 442a and 442b are rounded.

As shown therein, the stopper 441 formed on the pivoting plate 430 is provided as a free end in the pivoting plate 430 so as to be elastically movable inward or outward in a radial direction. To form the stopper 441, the pivoting plate 430 has a cut-open form at one side thereof.

Although one stopper 441 is provided, the protrusions 442a and 443b are provided in the pivoting plate inserting boss 422 while forming a pair at different positions along a circumferential direction of the pivoting plate 430. If the stopper 441 is caught in a first protrusion 442a, the locker 410 is urged not to freely pivot at a locking position of the locker 410. If the stopper 441 is caught in a second protrusion 442b, the locker is urged not to freely pivot at a releasing position of the locker 410.

Meanwhile, the battery module 400 and the battery reception portion 121 are provided with a primary coupling portion 450 for primarily coupling the battery module 400 and the battery reception portion 121 before the operation of the locker 410.

The primary coupling portion 450 includes a primary coupling projection 451 provided at a lateral side of the battery module 400, and a primary coupling groove (not shown) provided in an inner wall of the battery reception portion 121. Thus, a user inserts the primary coupling projection 451 of the battery module 400 into the primary coupling groove of the battery reception portion 121, and then pivots the locker 410, thereby completely locking the battery module 400.

With this configuration, the mobile terminal operates as follows.

To lock the battery module 400 as shown in FIGs. 4 and 11, the primary coupling projection 451 of the battery module 400 is first inserted in the primary coupling groove of the battery reception portion 121, and then the locker 410 pivots in one direction so that the flange 412 of the locker 410 can be inserted in the locking groove 401 of the battery module 400. In this case, the stopper 441 is caught in the first protrusion 442a so that the locker 410 cannot freely pivot.

On the other hand, to release the battery module 400 as shown in FIGs. 5 and 12, the locker 410 is pivots in a direction reverse to the foregoing direction so that the flange 412 of the locker 410 can be separated from the locking groove 401 of the battery module 400, and then the battery module 400 is separated. In this case, the stopper 441 is caught in the second protrusion 442b so that the locker 410 cannot freely pivot.

As above, according to the exemplary embodiments of the present inventive concept, there is provided a mobile terminal which has a simple and uncomplicated structure but detachably couples with a battery module more easily than a conventional one.

While this invention has been particularly shown and described with reference to preferred embodiments thereof, it will be understood by those skilled in the art that various changes in form and details may be made therein without departing from the scope of the invention as defined by the appended claims.

### [INDUSTRIAL APPLICABILITY]

The present inventive concept can be applied to an industrial mobile terminal.

## Claims

1. A mobile terminal comprising
a front case (110);
a rear case (120) detachably coupled to the front case (110) at a rear of the front case (110) with a component reception space, in which a main printed circuit board (140), PCB, is arranged, therebetween, and comprising a battery reception portion (121) recessed toward the front case (110) at one side thereof;
a battery module (400) coupled to the battery reception portion (121); and
a locker (410) rotatably coupled to the rear case (120) and making the battery module (400) be locked to or released from the battery reception portion (121),
wherein the battery module (400) and the battery reception portion (121) are provided with a primary coupling portion (450) for primarily coupling the battery module (400) and the battery reception portion (121) before operation of the locker (410).

2. The mobile terminal according to claim 1, wherein a pair of the lockers (410) is provided, each of the lockers (410) comprising:
a body (411);
a flange (412) protruding from one side of the body (411), and being inserted in a locking groove (401) of the battery module (400) when the body (411) is arranged in a lengthwise direction of the rear case (120), but separated from the locking groove (401) of the battery module (400) when the body (411) is arranged in a direction transverse to the lengthwise direction of the rear case (120); and
a shaft (413) connected to the body (411) and inserted in a locker coupling hole (420) of the rear case (120).

3. The mobile terminal according to claim 2, wherein one of the rear case (120) formed with the locker coupling hole (420) and the body (411) of the locker (410) is formed with a pivoting groove (414), and the other one is formed with a pivoting angle restricting projection (421) for restricting the pivoting angle of the pivoting groove (414).

4. The mobile terminal according to claim 3, wherein the pivoting groove (414) is provided on a rear of the body (411) in the form of an arc, and the pivoting angle restricting projection (421) is provided protruding from the surface of the rear case (120) formed with the locker coupling hole (420).

5. The mobile terminal according to claim 2, wherein the body (411) has a convex surface from which a locker handling rib (411a) further protrudes.

6. The mobile terminal according to claim 2, further comprising a pivoting plate (430) coupled to the shaft (413) of the locker by a bolt from a rear of the rear case (120) and pivoting along with the locker (410).

7. The mobile terminal according to claim 6, wherein one of the shaft (413) and the pivoting plate (430) is provided with at least one coupling projection (415), and the other one is formed with a projection insertion groove (431) in which the coupling projections (415) are partially inserted.

8. The mobile terminal according to claim 6, wherein the rear of the rear case (120) formed with the locker coupling hole (420) is further formed with a pivoting plate inserting boss (422) in which the pivoting plate (430) is inserted.

9. The mobile terminal according to claim 8, further comprising a free-pivoting restrictor (440) for restricting free-pivoting of the locker (410) in the pivoting plate (430) and the pivoting plate inserting boss (422).

10. The mobile terminal according to claim 9, wherein the free-pivoting restrictor includes
a stopper (441) formed on one of the pivoting plate (430) and the pivoting plate inserting boss (422); and
a protrusion (442a, 442b) formed in the other one of the pivoting plate (430) and the pivoting plate inserting boss (422) and catching the stopper (441).

11. The mobile terminal according to claim 10, wherein the stopper (441) is provided in the pivoting plate (430), and
the protrusions (442a, 442b) are provided in the pivoting plate inserting boss (422) while forming a pair at different positions along a circumferential direction of the pivoting plate (430).

12. The mobile terminal according to claim 11, wherein the stopper (441) is provided as a free end in the pivoting plate (430) so as to be elastically movable inward or outward in a radial direction.

13. The mobile terminal according to claim 10, wherein outer surfaces of the stopper (441) and the protrusions (442a, 442b) are rounded.

14. The mobile terminal according to claim 1, further comprising a middle case (130) arranged between the front and rear cases (110, 120) and assembled together with the front and rear cases (110, 120), at one side of which the main PCB (140) is assembled.

## Patentansprüche

1. Mobiles Endgerät, mit:
einem vorderen Gehäuse (110);
einem hinteren Gehäuse (120), das abnehmbar mit dem vorderen Gehäuse (110) an einer Hinterseite des vorderen Gehäuses (110) mit einem Komponentenaufnahmeraum verbunden ist, in welchem eine gedruckte Leiterplatte (140), PCB, dazwischen angeordnet ist, und mit einem Batterieaufnahmebereich (121), der in Richtung zu dem vorderen Gehäuse (110) auf einer Seite zurückgesetzt ist;
einem Batteriemodulen (400), das mit dem Batterieaufnahmebereich (121) verbunden ist; und
einem Verschluss (410), der drehbar mit dem hinteren Gehäuse (120) verbunden ist und dafür sorgt, dass das Batteriemoduls (400) verriegelt ist mit oder losgelöst ist von dem Batterieaufnahmebereich (121),
wobei das Batteriemodul (400) und der Batterieaufnahmebereich (121) mit einem primären Kopplungsbereich (450) zur primären Verbindung des Batteriemoduls (400) und des Batterieaufnahmebereichs (121) vor Betätigung des Verschlusses (410) versehen sind.

2. Mobiles Endgerät nach Anspruch 1, wobei ein Paar der Verschlüsse (410) vorgesehen ist, wobei jeder der Verschlüsse (410) aufweist:
einen Körper (411);
einen Flansch (412), der aus einer Seite des Körpers (411) hervorsteht und in eine Verriegelungsnut (401) des Batteriemoduls (400) eingeführt ist, wenn der Körper (411) in einer Längsrichtung des hinteren Gehäuses (120) angeordnet ist, aber von der Verriegelungsnut (401) des Batteriemoduls (400) getrennt ist, wenn der Körper (411) in einer Richtung quer zu der Längsrichtung des hinteren Gehäuses (120) angeordnet ist; und
einen Schaft (413), der mit dem Körper (411) verbunden und in eine Verschlusskopplungsbohrung (420) des hinteren Gehäuses (120) eingeführt ist.

3. Mobiles Endgerät nach Anspruch 2, wobei das hintere Gehäuse (120), das mit der Verschlusskopplungsbohrung (420) versehen ist, oder der Körper (411) des Verschlusses (410) mit einer Dreh-Nut (414) versehen ist, wobei die andere Komponente mit einem Drehwinkel-Begrenzungsvorsprung (421) versehen ist, sodass der Drehwinkel der Dreh-Nut (414) begrenzt wird.

4. Mobiles Endgerät nach Anspruch 3, wobei die Dreh-Nut (414) an einer Hinterseite des Körpers (411) in der Form eines Bogens vorgesehen ist, und der Drehwinkel-Begrenzungsvorsprung (421) so vorgesehen ist, dass er aus der Oberfläche des hinteren Gehäuses (120), das mit der Verschlusskopplungsbohrung (420) versehen ist, hervorsteht.

5. Mobiles Endgerät nach Anspruch 2, wobei der Körper (411) eine konvexe Fläche hat, aus der eine Verschlusshandhabungsrippe (411a) hervorsteht.

6. Mobiles Endgerät nach Anspruch 2, das ferner eine Drehplatte (430) aufweist, die mit dem Schaft (413) des Verschlusses durch eine Schraube ausgehend von Hinterseite des hinteren Gehäuses (120) verbunden und entlang des Verschlusses (410) drehbar ist.

7. Mobiles Endgerät nach Anspruch 6, wobei der Schaft (413) oder die Drehplatte (430) mit mindestens einem Kopplungsvorsprung (415) versehen ist, und die andere Komponente mit einer Vorsprungseinführnut (431) versehen ist, in die die Kopplungsvorsprünge (415) teilweise eingeführt sind.

8. Mobiles Endgerät nach Anspruch 6, wobei die Hinterseite des hinteren Gehäuses (120), das mit der Verschlusskopplungsbohrung (420) versehen ist, mit einer Drehplatten-Einführnabe (422) versehen ist, in die die Drehplatte (430) eingeführt ist.

9. Mobiles Endgerät nach Anspruch 8, das ferner ein Freidrehung-Begrenzungselement (440) zur Begrenzung der freien Drehbarkeit des Verschlusses (410) in der Drehplatte (430) und der Drehplatten-Einführnabe (422) aufweist.

10. Mobiles Endgerät nach Anspruch 9, wobei das Freidrehung-Begrenzungselement aufweist
ein Stoppelement (441), das auf der Drehplatte (430) oder der Drehplatten-Einführnabe (422) ausgebildet ist; und
einen Vorsprung (442a, 442b), der an der anderen Komponente aus der Drehplatte (430) und der Drehplatten-Einführnabe (422) ausgebildet ist und in das Stoppelement (441) einrastbar ist.

11. Mobiles Endgerät nach Anspruch 10, wobei das Stoppelement (441) in der Drehplatte (430) vorgesehen ist, und
die Vorsprünge (442a, 442b) in der Drehplatten-Einführnabe (422) vorgesehen sind, wobei sie ein Paar aus unterschiedlichen Stellungen entlang einer Umfangsrichtung der Drehplatte (430) bilden.

12. Mobiles Endgerät nach Anspruch 11, wobei das Stoppelement (441) als ein freies Ende in der Drehplatte (430) derart vorgesehen ist, dass es in radialer Richtung nach innen oder nach außen elastisch bewegbar ist.

13. Mobiles Endgerät nach Anspruch 10, wobei Außenflächen des Stoppelements (441) und die Vorsprünge (442a, 442b) abgerundet sind.

14. Mobiles Endgerät nach Anspruch 1, das ferner ein Mittelgehäuse (130) aufweist, das zwischen dem vorderen und dem hinteren Gehäuse (110, 120) angeordnet ist und zusammen mit dem vorderen und dem hinteren Gehäuse (110, 120) auf einer Seite montiert ist, auf der die Haupt-PCB (140) montiert ist.

## Revendications

1. Terminal mobile comprenant
un boîtier avant (110);
un boîtier arrière (120) couplé de manière détachable au boîtier avant (110) à l'arrière du boîtier avant (110) avec un espace de réception de composant, dans lequel une carte de circuit imprimé principale (140), PCB, est disposée entre ceux-ci, et comprenant une partie de réception de batterie (121) en retrait vers le boîtier avant (110) d'un côté de celui-ci;
un module de batterie (400) couplé à la partie de réception de batterie (121); et
un casier (410) couplé de manière rotative au boîtier arrière (120) et faisant en sorte que le module de batterie (400) est verrouillé ou libéré de la partie de réception de batterie (121),
dans lequel le module de batterie (400) et la partie de réception de batterie (121) comportent une partie de couplage primaire (450) pour coupler principalement le module de batterie (400) et la partie de réception de batterie (121) avant le fonctionnement du casier (410).

2. Terminal mobile selon la revendication 1, dans lequel une paire des casiers (410) est à condition, chacun des casiers (410) comprenant:
un corps (411);
une bride (412) faisant protubérance d'un côté du corps (411), et étant introduite dans une rainure de verrouillage (401) du module de batterie (400) lorsque le corps (411) est disposé dans le sens longitudinal du boîtier arrière (120), mais séparé de la rainure de verrouillage (401) du module de batterie (400) lorsque le corps (411) est disposé dans une direction transversale à la direction longitudinale du boîtier arrière (120); et
un arbre (413) relié au corps (411) et introduit dans un trou d'accouplement de casier (420) du boîtier arrière (120).

3. Terminal mobile selon la revendication 2, dans lequel l'un des éléments parmi le boîtier arrière (120) présentant le trou d'accouplement du casier (420) et le corps (411) du casier (410) présente une rainure pivotante (414), et l'autre présente une protubérance de restriction de l'angle de pivotement (421) pour limiter l'angle de pivotement de la rainure pivotante (414).

4. Terminal mobile selon la revendication 3, dans lequel la rainure pivotante (414) est prévue sur l'arrière du corps (411) en forme d'arc et la protubérance de restriction de l'angle de pivotement (421) est prévue faisant protubérance depuis la surface du boîtier arrière (120) formée avec le trou d'accouplement de casier (420).

5. Terminal mobile selon la revendication 2, dans lequel le corps (411) présente une surface convexe à partir de laquelle une nervure de manipulation de casier (411a) fait protubérance plus loin.

6. Terminal mobile selon la revendication 2, comprenant en outre une plaque pivotante (430) couplé à l'arbre (413) du casier par un boulon depuis l'arrière du casier arrière (120) et pivotant avec le casier (410).

7. Terminal mobile selon la revendication 6, dans lequel l'un des éléments parmi l'arbre (413) et la plaque pivotante (430) est pourvu d'au moins une protubérance de couplage (415), et l'autre est formé avec une rainure d'insertion de projection (431) dans laquelle les protubérances de couplage (415) sont partiellement introduites.

8. Terminal mobile selon la revendication 6, dans lequel l'arrière du boîtier arrière (120) formé avec le trou d'accouplement de casier (420) est en outre formé avec un bossage d'insertion de plaque pivotante (422) dans lequel la plaque pivotante (430) est introduite.

9. Terminal mobile selon la revendication 8, comprenant en outre un limiteur à pivotement libre (440) pour limiter le pivotement libre du casier (410) dans la plaque pivotante (430) et le bossage d'insertion de la plaque pivotante (422).

10. Terminal mobile selon la revendication 9, dans lequel le limiteur à pivotement libre inclut
un bouchon (441) formé sur l'une de la plaque pivotante (430) et le bossage d'insertion de plaque pivotante (422); et
une protubérance (442a, 442b) formée dans l'autre de la plaque pivotante (430) et du bossage d'insertion de plaque pivotante (422) et accrochant le bouchon (441).

11. Terminal mobile selon la revendication 10, dans lequel le bouchon (441) est prévu dans la plaque pivotante (430), et
les protubérances (442a, 442b) sont prévues dans le bossage d'insertion de plaque pivotante (422) tout en formant une paire à des positions différentes le long d'une direction circonférentielle de la plaque pivotante (430).

12. Terminal mobile selon la revendication 11, dans lequel le bouchon (441) est prévu comme extrémité libre dans la plaque pivotante (430) de manière à pouvoir être déplacée élastiquement vers l'intérieur ou l'extérieur dans une direction radiale.

13. Terminal mobile selon la revendication 10, dans lequel les surfaces externes du bouchon (441) et les protubérances (442a, 442b) sont arrondies.

14. Terminal mobile selon la revendication 1, comprenant en outre un boîtier central (130) disposé entre les boîtiers avant et arrière (110, 120) et assemblé avec les boîtiers avant et arrière (110, 120), sur un côté desquels est assemblée la PCB principale (140).
